# EUROPÄISCHE PATENTSCHRIFT

(11) **EP 0 712 651 B1**
(45) Veröffentlichungstag und Bekanntmachung des Hinweises auf die Patenterteilung: **02.02.2000**
(21) Anmeldenummer: 95117439.0
(22) Anmeldetag: 06.11.1995
(51) Int. Cl.: B01D 15/08, C11C 1/00

(54) **Verfahren zum Gewinnen eines Stoffes oder einer Stoffgruppe aus einer Mischung**
Process for recovering a substance or a group of substances from a mixture
Procédé de récupération d'une substance ou d'un groupe de substances à partir d'un mélange

(30) Priorität: 15.11.1994 DE 4440694
(43) Veröffentlichungstag der Anmeldung: 22.05.1996
(73) Patentinhaber: K.D. Pharma Bexbach GmbH, 66450 Bexbach (DE)
(72) Erfinder: Krumbholz, Rudolf, Dr., F-57510 Holving (FR); Lembke, Peter, Dr., D-66583 Spiesen-Elversberg (DE)
(74) Vertreter: Bernhardt, Winfrid, Dr.-Ing.

(56) Entgegenhaltungen:
- EP-A- 0 373 391
- EP-A- 0 558 974
- EP-A- 0 586 249
- DE-A- 3 831 516
- PATENT ABSTRACTS OF JAPAN vol. 013 no. 592 (C-671) ,26.Dezember 1989 & JP-A-01 249742 (MIYAGI PREF GOV) 5.Oktober 1989,

## Beschreibung

Die Erfindung betrifft ein Verfahren zum Gewinnen eines Stoffes oder einer Stoffgruppe aus einer Mischung unter trennender Anwendung eines Lösungsmittels.

Als solches Verfahren ist die Extraktion mittels eines selektiven, d.h. nur den zu gewinnenden Stoff oder die zu gewinnende Stoffgruppe lösenden oder im Rückstand belassenden Lösungsmittels bekannt.
Die Leistungsfähigkeit der Extraktion ist hinsichtlich der Trennschärfe oft begrenzt, da beim Lösen des löslichen Stoffes oder der löslichen Stoffe auch Moleküle anderer, an sich unter den eingestellten Bedingungen in dem Lösungsmittel nicht löslicher Stoffe in die Lösung mitgenommen werden; außerdem sind oft von vorn herein schon die Löslichkeitsunterschiede zwischen den zu trennenden Stoffen gering.
Sie ist ferner begrenzt insofern, als sie praktisch immer nur einen Schnitt zwischen löslichen und nicht löslichen Stoffen ermöglicht.

Der Erfindung liegt die Aufgabe zugrunde, ein leistungsfähigeres Trennverfahren zu schaffen.

Gemäß der Erfindung ist vorgesehen, daß die Mischung in Gegenwart eines Sorbens als stationärer Phase mit dem Lösungsmittel behandelt wird, wobei das Lösungsmittel im Gleichstrom mit der Mischung oder im Gegenstrom zu der Mischung an dem Sorbens vorbeigeführt wird oder an der unbewegten Mischung und dem Sorbens vorbeigeführt wird, und daß das Lösungsmittel und das Sorbens derart gewählt sind, daß die Haltewirkung des Sorbens die Trennung durch das Lösungsmittel beim Lösungsvorgang unterstützt und/oder danach im Zusammenwirken mit dem Lösungsmittel als mobiler Phase ergänzt.

Die Variante des Vorbeiführens des Lösungsmittels an der unbewegten Mischung ist die Verfahrenstechnik der Extraktion.
Hier kann das erfindungsgemäß eingesetzte Sorbens so gewählt werden, daß es Moleküle bindet, die sonst in die Lösung mitgenommen werden können, oder sogar Moleküle solcher Stoffe, die an sich in dem Lösungsmittel löslich sind und die man nicht lösen möchte. Das Sorbens kann und soll bevorzugt die Moleküle schon vor dem Lösungsvorgang unmittelbar aus der Mischung heraus binden, so daß sie garnicht erst in die Lösung gehen: Die Extraktion wird durch das Sorbens unterstützt. Es kann aber auch stattdessen, bevorzugt jedoch zusätzlich, bereits in Lösung gegangene Moleküle der Lösung sofort wieder entziehen, indem es sie in Wechselwirkung mit dem, entsprechend gewählten, Lösungsmittel als mobiler Phase bindet.
Die Bindung kann eine dauernde sein, d.h. bis zum Entfernen des Rückstands, bei dem das Sorbat von dem Sorbens abgelöst werden kann. Eine nur zeitweilige Bindung wirkt sich aber auch schon sehr vorteilhaft aus.
In jedem Falle ist die Trennschärfe verbessert.

Die Variante, das Lösungsmittel im Gegenstrom zu der Mischung zu führen, ist die Verfahrenstechnik der, kontinuierlichen, Gegenstrom-Extraktion.
Hier kann das Sorbens die betreffenden Moleküle nur zweitweilig binden, ob aus der Mischung oder der Lösung oder beidem, denn im Endergebnis sollen die betreffenden Moleküle mit im Rückstand ausgetragen werden. Auch die Trennschärfe der Gegenstrom-Extraktion wird durch die Erfindungsmaßnahmen gesteigert.

Die Variante, das Lösungsmittel im Gleichstrom mit der Mischung zu führen, ist eine grundsätzlich neue Verfahrensweise der Extraktion.
Während man die zuvor behandelten Verfahren der Extraktion und der Gegenstrom-Extraktion auch nach der Erfindung in der Regel mit einem selektiv nur einen Stoff oder eine Stoffgruppe lösenden Lösungsmittel durchführen und so die Mischung in zwei Fraktionen trennen wird, ist für die neue Behandlung im Gleichstrom als Regel vorgesehen, daß die Mischung unter Anwendung eines mehrere zu trennende Stoffe oder Stoffgruppen, jedoch unterschiedlich schnell, lösenden Lösungsmittels chargenweise aufgegeben und im Gleichstrom mit dem Lösungsmittel in mehrere Fraktionen getrennt wird.

Wie schon bei den beiden anderen, die Extraktion und die Gegenstromextraktion abwandelnden Varianten des erfindungsgemäßen Verfahrens wird vorzugsweise auch bei dieser, der präparativen Chromatographie näheren Variante durch entsprechende Wahl des Sorbens und des Lösungsmittels ein Stoff oder eine Stoffgruppe erst schon durch unmittelbare Einwirkung auf die Mischung festgehalten, so daß sein bzw. ihr Eintritt in die Lösung verzögert wird, und dann nach Eintritt in die Lösung noch einmal in der bekannten Weise der Chromatographie durch Wechsel zwischen stationärer und mobiler Phase festgehalten, so daß sein bzw. ihr weiterer Durchlauf verzögert wird. Wiederum kann aber, je nach den Verhältnissen, nur das eine oder nur das andere schon zu dem Erfolg führen, daß Stoffe oder Stoffgruppen in der Folge aufgefangener Fraktionen in einem brauchbaren, sonst nicht zu erzielenden Maße getrennt werden.

Diese Verfahrensweise kann auch, ausgehend von der Chromatographie betrachtet, als eine durch qualitativ fortschreitende Extraktion unterstützte Chromatographie gesehen werden.
Die Produktivität präparativer Chromatographie läßt sich auf diese Weise erheblich steigern, worauf noch näher eingegangen wird. Darin besteht hier die Aufgabenlösung der Leistungssteigerung.

Von der herkömmlichen Chromatographie unterscheidet sich die erfindungsgemäße Vorgehensweise im wesentlichen nur durch eine vielfach vergrößerte Aufgabemenge. Die Chromatographie wird als ein Zwei-Phasen-System aus einer flüssigen, gasförmigen oder überkritischen mobilen Phase und einer festen stationären Phase verstanden. Die zu trennende Mischung muß in der mobilen Phase gelöst sein. Ihre Moleküle müssen zwischen Beweglichkeit in der mobilen Phase und Anlagerung an der stationären Phase wechseln können.
Die nach der Erfindung in der Regel über oder unter einer Säule, die ein mit dem Sorbens belegtes Gerüst aufweist, in die mobile Phase, beispielsweise überkritisches Kohlendioxid, eingegebene Menge der Mischung löst sich nicht spätestens beim Erreichen der Säule. Sie bildet am Anfang der Säule einen "Pfropfen" von mindestens 2%, besser 5 bis 10% oder mehr der Säulenlänge zwischen der vorher in die Säule eingeströmten und der nachströmenden mobilen Phase. Der Pfropfen ist insofern aufgelockert als die eingegebene Mischung von der nachströmenden mobilen Phase in das Gerüst eingedrückt wird, er ist aber gleichwohl zunächst ein Pfropfen.
Schon ohne Haltewirkung des Sorbens auf einen Stoff oder eine Stoffgruppe vollzieht sich in der Mischung die Lösung der verschiedenen Stoffe der Mischung unterschiedlich schnell entsprechend deren Löslichkeit. Die leichter löslichen Stoffe gehen bevorzugt in Lösung. Beispielsweise löst sich im Falle einer Mischung aliphatischer Kohlenwasserstoffverbindungen bevorzugt zuerst die Verbindung mit der geringsten Kettenlänge, dann diejenige mit der nächstgrößeren usf.. Bei dem durch die Strömung der mobilen Phase bewirkten Durchgang durch die Säule werden Bereiche unterschiedlicher Konzentrationen der verschiedenen Stoffe auseinandergezogen. Das würde allerdings für eine Trennung und ein gesondertes Auffangen der verschiedenen Stoffe am Ausgang der Säule nacheinander nicht ausreichen.
Die Wirkung wird jedoch überlagert von der gleichläufigen Wirkung der Chromatographie. Diese kann übrigens, abgesehen von ihrer selektiven Wirkung auf einen einzelnen Stoff oder eine Stoffgruppe, mit einem geeigneten Sorbens ebenfalls noch die Verbindungen ihrer Kettenlänge nach auseinanderziehen. Die Chromatographie setzt gleichzeitig ein mit der fortschreitenden Auflösung des Pfropfens in der mobilen Phase. Wo das Sorbens mit Lösung in Berührung steht, treten die gelösten Moleküle in Wechselwirkung zwischen der Lösung als mobiler und dem Sorbens als stationärer Phase. In einem Höhenbereich der Säule zwischen dem noch ungelösten Pfropfen und schließlich der reinen Lösung bestehen ungelöste Mischung und Lösung in Verteilung eng nebeneinander. Bereits dieser Höhenbereich der Säule ist daher für die Chromatographie genutzt. Ein mehr oder weniger hoher unterer Bereich reiner Chromatographie kann sich anschließen, muß es aber nicht unbedingt.

Die präparative Chromatographie ist normalerweise selbst in der Lage, in einem brauchbaren Maße zu trennen, und sie wird an sich durch Überladung nur ungenauer. Die Überlagerung mit der Wirkung der, qualitativ, fortschreitenden Extraktion kann aber, wie mit der Erfindung erkannt wurde und genutzt werden soll, die durch die Chromatographie erhältlichen Fraktionen, zumindest stellenweise, bis auf das doppelte und mehr auseinanderziehen. Das gilt so jedenfalls dann, wenn das Sorbens auch bereits unmittelbar in der Mischung wirksam ist, was in der Regel der Fall sein wird.
Damit ist eine drastische Erhöhung der Durchsatzmengen möglich, d.h. der Produktivität.

Entscheidend ist dabei außerdem, daß das stärkere Auseinanderziehen von Stoffen unterschiedlicher Löslichkeit und ggf. Adsorbierbarkeit auch der rein chromatographischen Trennung verschiedener Stoffe gleicher Löslichkeit zugute kommen kann, beispielsweise Fettsäuren gleicher Kohlenstoffatomzahl und unterschiedlichen Sättigungsgrades. Die Wechselwirkung der Moleküle zwischen der mobilen und der stationären Phase kann sich freier vollziehen, wenn andere Moleküle schon entfernt worden sind und die Gesamtkonzentration entsprechend verringert worden ist.
Eine besonders vorteilhafte Ausgestaltung der Erfindung besteht in ihrer Anwendung in Kombination mit dem aus der DE 42 06 539 A1 und der EP 0 558 974 A1 bekannten Verfahren zum Gewinnen ungesättigter Fettsäuren und/oder Verbindungen solcher Fettsäuren, d.h. mit einem Sorbens, das an mindestens einer Gruppe seines Moleküls bzw. seiner Moleküle mindestens ein freies Elektronenpaar aufweist und/oder das in seinem Molekül bzw. seinen Molekülen mindestens eine Mehrfachbindung aufweist, wobei die Fettsäuren und/oder Fettsäureverbindungen nach dem Durchgang der, sofern vorhanden, gesättigten Fettsäure oder Fettsäureverbindung gleicher Kohlenstoffatomzahl durch die Säule für sich oder in einer angereicherten Mischung aufgefangen wird.
Die beiden Maßnahmen ergänzen sich. Die qualitativ fortschreitende Extraktion fördert die Trennung nach der Löslichkeit, das Sorbens mit dem freien Elektronenpaar und/oder der Mehrfachbindung trennt die Fettsäuren gleicher Löslichkeit, aber unterschiedlichen Sättigungsgrades.

Grundsätzlich ist auch bei der Kombination der qualitativ fortschreitenden Extraktion mit der Chromatographie die technische Betriebsweise der normalen Extraktion möglich. In Betracht kommt das vor allem für Feststoffe, die nicht so einfach in ein unter Druck stehendes System eingespeist werden können.
Als Lösungsmittel und zugleich mobile Phase kommen außer Kohlendioxid die auch sonst für die Extraktion und Chromatographie üblichen Lösungsmittel in Reinform oder Mischung in Betracht, z.B. Hexan, Dichlormetan, Methanol, Ethanol, als Fluide Schwefelhexafluorid, Propan, Distickstoffoxid, überkritisches Wasser.

Im folgenden sei die Erfindung anhand von Beispielen weiter erläutert.

### Beispiel 1

Aus einem Lebertranölethylester wurde eine Mischung extrahiert, in der die ungesättigten Fettsäuren Arachidonsäure (20:4), Eicosapentaensäure (20:5), Docosapentaensäure (22:5) und Docosahexaensäure (22:6) angereichert waren.
Die Extraktion wurde im Gegenstromverfahren durchgeführt mit überkritischem Kohlendioxid unter 135 bar Druck und 57°C Temperatur in einer mit einer Edelstahl-Sulzer-Packung versehenen Säule von 4,5 cm Durchmesser und 300 cm Höhe. Die Flußrate des von unten nach oben durch die Säule geleiteten Kohlendioxids betrug 20 kg/h. Die Einleitung des Lebertranölethylesters erfolgte in etwa 200 cm Höhe mit einer Zuführungsrate von 0,54 kg/h.

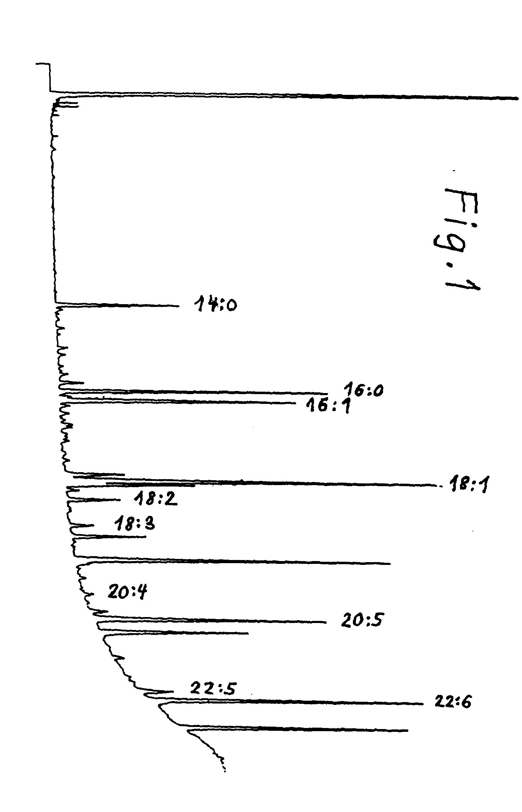

Fig. 1 zeigt in einem Gas-Chromatogramm die Analyse des Lebertranölethylesters. Die wichtigeren Säuren sind darin in ihrer üblichen Bezeichnungsweise eingetragen, d.h. Kohlenstoffatomzahl:Doppelbindungszahl. Die Gehalte an den oben ausdrücklich genannten Säuren betrugen
- 20:4: 0,5 Gew.-%
- 20:5: 8,9 Gew.-%
- 22:5: 1,3 Gew.-%
- 22:6: 10,5 Gew.-%.

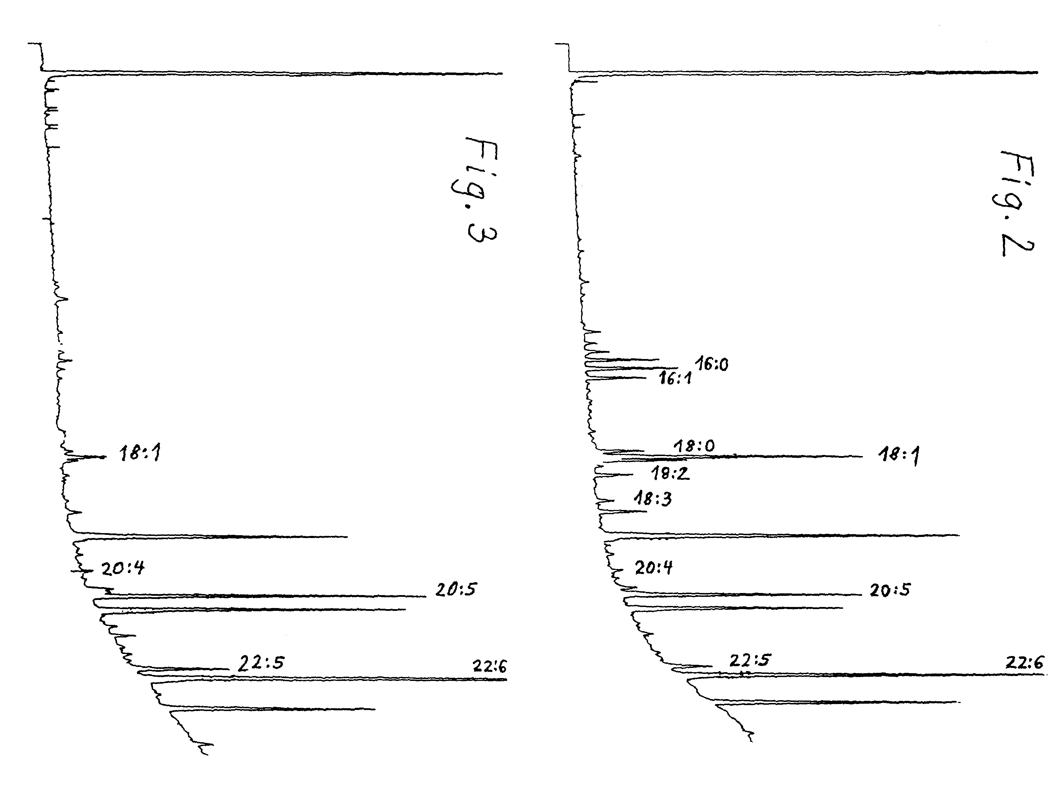

Nach normaler Gegenstrom-Extraktion befanden sich im Rückstand, dargestellt in Fig. 2,
- 20:4: 0,9 Gew.-%
- 20:5: 11,0 Gew.-%
- 22:5: 2,1 Gew.-%
- 22:6: 15,4 Gew.-%.

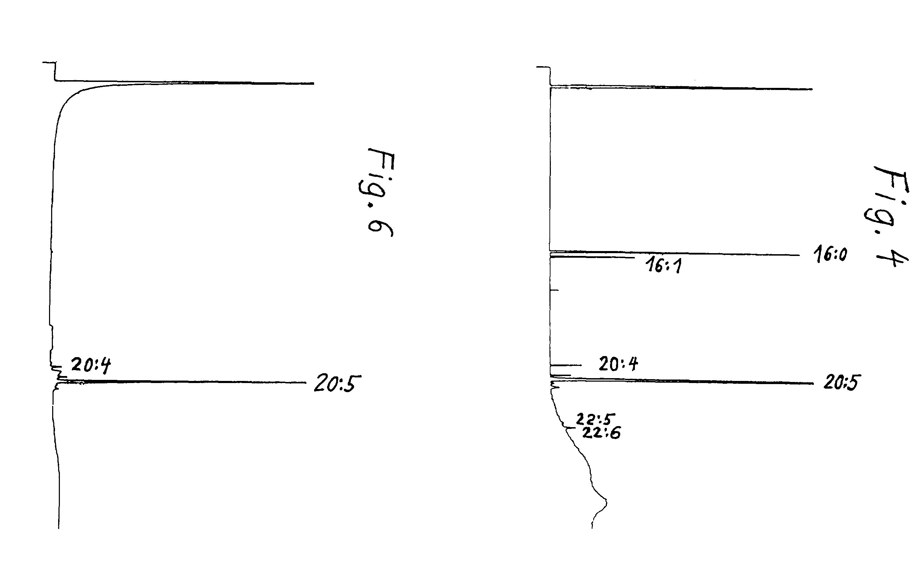

Die Extraktion wurde wiederholt mit einer 60 cm hohen Packung der Säule mit Kieselgel, Korndurchmesser 1000µ, das mit einer Aminopropyl-Phase belegt war; darüber befand sich wiederum Edelstahl-Sulzer-Packung.
Im Rückstand befanden sich nun, siehe Fig. 3,
- 20:4: 0,9 Gew.-%
- 20:5: 15,9 Gew.-%
- 22:5: 5,1 Gew.-%
- 22:6: 34,3 Gew.-%.

Bei der angegebenen Temperatur- und Druckeinstellung des als Lösungsmittel verwendeten Kohlendioxids sind etwa die Säuren bis hinauf zur Kohlenstoffatomzahl 18 löslich und darüber hinaus nicht mehr. Der Schnitt der reinen Extraktion ist jedoch nicht scharf. Es finden sich auch noch Säuren mit kürzeren Molekülen im Rückstand, wie aus Fig. 2 ersichtlich, und es sind umgekehrt Säuren mit längerkettigen Molekülen in das Extrakt mitgezogen worden, wie aus dem Vergleich mit der adsorbtionsunterstützten Extraktion an den höheren Gehalten der betrachteten Säuren ersichtlich, die in dem zweiten Versuch erhalten wurden:
In Fig. 3 sind die verbliebenen Peaks teilweise großflächiger geworden entsprechend erhöhten Gehalten. Im übrigen ist zu erkennen, daß in der Kombination mit der Anwendung des Sorbens der Extraktionsschnitt wesentlich schärfer wurde. Kleinere Moleküle als mit 18 Kohlenstoffatomen sind kaum noch bemerkbar. Die adsorbierten Moleküle belasten den Lösungsvorgang nicht und werden nicht in die Lösung mitgezogen. Das Lösungsmittel kann ungestörter wirken.

### Beispiel 2

Aus einem, wie das Gas-Chromatogramm Fig. 4 zeigt, in der Hauptsache aus Palmitinsäure (16:0), Palmitoleinsäure (16:1) und Eicosapentaensäure (20:5) bestehenden Fischölkonzentrat wurde eine hochkonzentrierte Eicosapentaensäure abgetrennt.

Das Fischölkonzentrat wurde nach Umesterung in Ethylester in überkritischem CO₂ durch eine Säule von 110 cm Höhe und 10 cm Durchmesser geleitet, die mit einer Packung von mit einer Aminopropyl-Phase belegtem Kieselgel, Korndurchmesser 1000µ, versehen war. Der CO₂-Fluß betrug 160 kg/h bei 40°C und 110 bar.

In vier Versuchen wurden Mengen von 70 ml, 200 ml, 260 ml und 400 ml über der Säule in den CO₂-Strom eingegeben.
Das Eluat wurde jeweils in zwanzig Fraktionen aufgefangen.

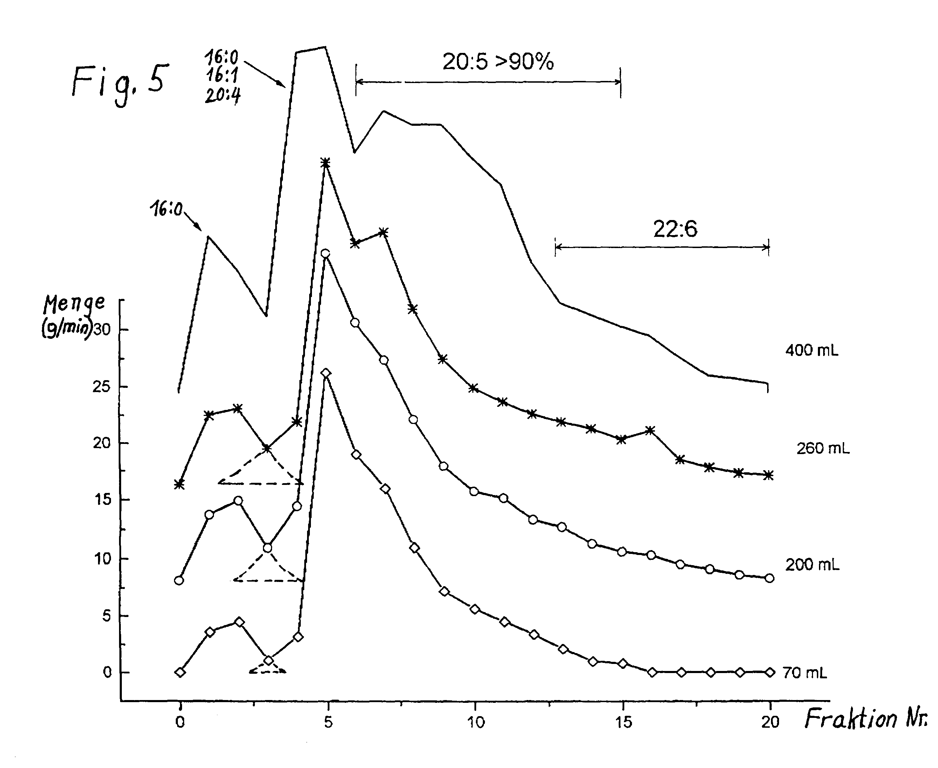

Die Ergebnisse sind in Fig. 5 dargestellt.

Wie Analysen der einzelnen Fraktionen erweisen, eluiert an dem ersten, von Fraktion Nr. 1 bis Nr. 3 sich erstreckenden Peak (Spitze nach 2 min) hauptsächlich 16:0 und eluieren an dem zweiten, von Nr. 4 bis Nr. 6 sich erstreckenden Peak (Spitze nach 6 min) hauptsächlich 16:0, 16:1 und 20:4.
Dabei bleibt bei 70 ml Eingabe die Analyse bis Fraktion Nr. 2 rein 16:0; erst bei Nr. 3 besteht eine Überschneidung mit dem zweiten Peak. Die Überschneidung mit dem zweiten Peak wird bei 200 ml Eingabe größer und bei 260 ml Eingabe noch einmal mehr; bei 200 ml ist nur die erste Fraktion noch rein 16:0, bei 260 ml ist sie es noch knapper.

Demgegenüber bildet sich hinter dem zweiten Peak bei steigender Eingabemenge fortschreitend ein dritter Peak aus. Er ist bei 70 ml und 200 ml nur bei Fraktion Nr. 7 angedeutet; bei 260 ml ist er ausgeprägt und schließt bereits Nr. 8 leicht ein; bei 400 ml erstreckt er sich stark ausgeprägt von Nr. 7 bis Nr. 13 (17. bis 25. min). Hier eluiert dominierend 20:5, ab Nr. 13, wie als Bereich eingetragen, zusammen mit 22:6, die am Ende überwiegt.

Bei 400 ml Eingabe haben die in Fig. 4 als Bereich herausgehobenen Fraktionen Nr. 7 bis Nr. 15 insgesamt einen Gehalt an 20:5 von über 90%. Fig. 5 zeigt dies in einem Gas-Chromatogramm.
Das bedeutet ein unter präparativer Zielsetzung äußerst günstiges Verhältnis zwischen der gewonnenen Menge und dem Konzentrationsgrad: In nur einem Arbeitsgang sind aus dem etwa 65% 20:5 enthaltenden Fischölkonzentrat 51% der Menge an 20:5 mit einer Konzentration von 92% wiedergefunden worden.

Die Elutionsprofile der Fig. 5 können im übrigen wie folgt gedeutet werden:
Die Eingabemenge von 70 ml liegt im ganzen noch im Rahmen der Chromatographie; um eine reine chromatographische Trennung durchzuführen, hätte man die Eingabe auf etwa 30 ml beschränkt. Bei der fortschreitenden Überladung geht die an sich vorhandene Selektivität der Chromatographie verloren. Der zweite und der erste Peak rücken näher zusammen und überschneiden sich stärker. Die Überschneidung ist gestrichelt eingezeichnet.
Zwischen dem dritten und dem zweiten Peak kommt jedoch eine überraschende Verbesserung der Selektivität zustande, d.h. zwischen 20:5 und den zuvor eluierenden Fettsäuren. An dieser Stelle kommen die oben erwähnten Wirkungen zum Tragen: Die auseinanderziehenden Wirkungen der qualitativ fortschreitenden Extraktion und der Chromatographie kommen zusammen; zusätzlich hält dabei die Aminopropylphase in besonderem Maße die langkettigen Fettsäuren mit der großen Zahl an Doppelbindungen fest und läßt sie dementsprechend verzögert eluieren.
Die besondere Herausbildung des dritten Peaks erst bei der größeren Überladung mag man sich damit erklären, daß die bindungsaktiven Stellen der Belegungsphase dann ziemlich vollständig nur von den am stärksten angezogenen, langkettigen, hoch ungesättigten Fettsäuren in Beschlag genommen sind und insoweit für die Moleküle mit geringerer Affinität gar keine chromatographische Kapazität mehr zur Verfügung steht.

### Beispiel 3

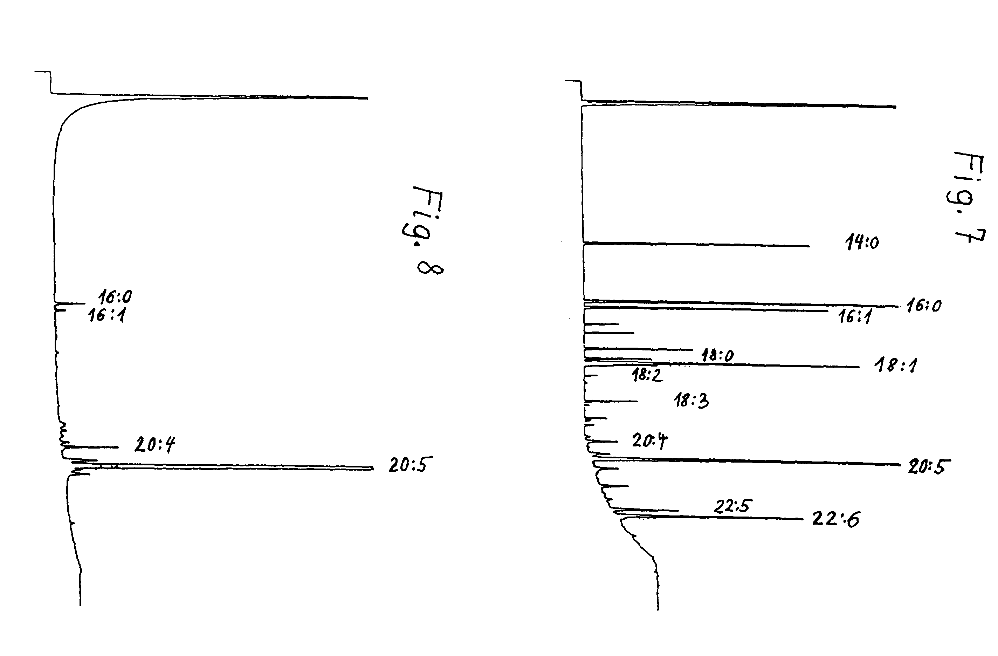

Ein dem Lebertranölethylester nach Fig. 1 ähnlicher Sardinenölethylester, dessen Gas-Chromatogramm in Fig. 7 gezeigt ist, wurde wie in Beispiel 2, Eingabemenge 400 ml, behandelt.
Es ergab sich am Ende ein ähnliches Eluationsprofil wie in Fig. 5 oben. Der die Hauptmasse der 20:5 enthaltende Peak kam jedoch entsprechend dem größeren Anteil von Fettsäuren kürzerer Kettenlänge später und war kürzer. Es konnten von der 21. bis 25. Minute sechs Fraktionen aufgefangen werden insgesamt mit einer Konzentration der 20:5 von 91%.

## Patentansprüche

1. Verfahren zum Gewinnen eines Stoffes oder einer Stoffgruppe aus einer Mischung unter trennender Anwendung eines Lösungsmittels,
dadurch gekennzeichnet,
daß die Mischung in Gegenwart eines Sorbens als stationärer Phase mit dem Lösungsmittel behandelt wird, wobei das Lösungsmittel im Gleichstrom mit der Mischung oder im Gegenstrom zu der Mischung an dem Sorbens vorbeigeführt wird oder an der unbewegten Mischung und dem Sorbens vorbeigeführt wird, und daß das Lösungsmittel und das Sorbens derart gewählt sind, daß die Haltewirkung des Sorbens die Trennung durch das Lösungsmittel beim Lösungsvorgang unterstützt und/oder danach im Zusammenwirken mit dem Lösungsmittel als mobiler Phase ergänzt.

2. Verfahren nach Anspruch 1,
dadurch gekennzeichnet,
daß die Mischung unter Anwendung eines selektiv nur einen Stoff oder eine Stoffgruppe lösenden Lösungsmittels, ggf. im Gegenstromverfahren kontinuierlich, durch Extraktion in zwei Fraktionen getrennt wird.

3. Verfahren nach Anspruch 1,
dadurch gekennzeichnet,
daß die Mischung unter Anwendung eines mehrere zu trennende Stoffe oder Stoffgruppen, jedoch unterschiedlich schnell, lösenden Lösungsmittels chargenweise aufgegeben und im Gleichstrom mit dem Lösungsmittel in mehrere Fraktionen getrennt wird.

4. Verfahren nach einem der Ansprüche 1 bis 3,
dadurch gekennzeichnet,
daß es mittels einer Säule durchgeführt wird, die ein mit dem Sorbens belegtes Gerüst aufweist.

5. Verfahren nach einem der Ansprüche 1 bis 4,
dadurch gekennzeichnet,
daß als Lösungsmittel ein flüssiges oder überkritisches Medium, insbesondere Kohlendioxid, angewandt wird.

6. Verfahren nach den Ansprüchen 3, 4 und 5,
dadurch gekennzeichnet,
daß es zum Gewinnen ungesättigter Fettsäuren und/oder Verbindungen solcher Fettsäuren angewandt wird mit einem Sorbens, das an mindestens einer Gruppe seines Moleküls bzw. seiner Moleküle mindestens ein freies Elektronenpaar aufweist und/oder das in seinem Molekül bzw. seinen Molekülen mindestens eine Mehrfachbindung aufweist, wobei die Fettsäuren und/oder Fettsäureverbindungen nach dem Durchgang der, sofern vorhanden, gesättigten Fettsäure oder Fettsäureverbindung gleicher Kohlenstoffatomzahl durch die Säule für sich oder in einer angereicherten Mischung aufgefangen wird.

## Claims

1. A process for obtaining a substance or a substance group from a mixture with separative use of a solvent,
characterized in that the mixture is treated with the solvent in the presence of a sorbent as a stationary phase, the solvent being led past the sorbent in cocurrent flow with the mixture or in countercurrent to the mixture or being led past the unstirred mixture and the solvent, and in that the solvent and the sorbent are selected in such a way that the retentive action of the sorbent assists the separation by the solvent during the dissolving process and/or then supplements it in co-operation with the solvent as a mobile phase.

2. Process according to Claim 1,
characterized in that the mixture is separated into two fractions by extraction using a solvent selectively dissolving only one substance or one substance group, if appropriate continuously in a countercurrent process.

3. Process according to Claim 1,
characterized in that the mixture is added batchwise using a solvent dissolving a number of substances or substance groups to be separated, but at different rates, and is separated into a number of fractions in cocurrent flow with the solvent.

4. Process according to one of Claims 1 to 3,
characterized in that it is carried out by means of a column which has an support coated with the sorbent.

5. Process according to one of Claims 1 to 4,
characterized in that the solvent used is a liquid or supercritical medium, in particular carbon dioxide.

6. Process according to Claims 3, 4 and 5,
characterized in that it is used for obtaining unsaturated fatty acids and/or compounds of such fatty acids using a sorbent which has at least one free electron pair on at least one group of its molecule or its molecules and/or which has at least one multiple bond in its molecule or its molecules, the fatty acids and/or fatty acid compounds being collected separately or in a concentrated mixture after passage through the column of the saturated fatty acid or fatty acid compound of identical carbon atomic number, if present.

## Revendications

1. Procédé de récupération d'une substance ou d'un groupe de substances à partir d'un mélange en appliquant un solvant à des fins de séparation, caractérisé en ce que le mélange est traité avec le solvant en présence d'un sorbant faisant office de phase stationnaire, le solvant étant passé devant le sorbant en courant parallèle avec le mélange ou en contre-courant par rapport au mélange ou bien étant passé devant le mélange stationnaire et le sorbant, et en ce que le solvant et le sorbant sont choisis tels que l'effet de maintien du sorbant assiste la séparation par le solvant lors de l'opération de dissolution et/ou la complète ensuite en coopération avec le solvant faisant office de phase mobile.

2. Procédé selon la revendication 1, caractérisé en ce que le mélange est séparé par extraction en deux fractions en appliquant un solvant qui dissout sélectivement une seule substance ou bien un groupe de substances, le cas échéant en continu en contre-courant.

3. Procédé selon la revendication 1, caractérisé en ce que le mélange est apporté par charges en appliquant un solvant qui dissout plusieurs substances ou groupes de substances à séparer, mais à des vitesses différentes, et en ce qu'il est séparé en plusieurs fractions en courant parallèle avec le solvant.

4. Procédé selon l'une quelconque des revendications 1 à 3, caractérisé en ce qu'il est mis en oeuvre au moyen d'une colonne qui présente une structure revêtie par le sorbant.

5. Procédé selon l'une quelconque des revendications 1 à 4, caractérisé en ce que l'on applique en tant que solvant un fluide liquide ou à l'état supercritique, en particulier du dioxyde de carbone.

6. Procédé selon l'une quelconque des revendications 3, 4 et 5, caractérisé en ce qu'il est appliqué pour récupérer des acides gras insaturés et/ou des compositions de tels acides gras, avec un sorbant qui présente au moins une paire d'électrons libres sur au moins un groupe de sa molécule ou de ses molécules et/ou qui présente au moins une liaison multiple dans sa molécule ou ses molécules, les acides gras et/ou les compositions d'acide gras sont récupéré(e)s après passage, si présent, de l'acide gras saturé ou composition d'acide gras saturé de même nombre d'atomes de carbone à travers la colonne individuellement ou en un mélange enrichi.
